(19) Europäisches Patentamt
European Patent Office
Office européen des brevets

(11) **EP 4 361 748 A1**

(12) **EUROPÄISCHE PATENTANMELDUNG**

(43) Veröffentlichungstag:
**01.05.2024  Patentblatt 2024/18**

(21) Anmeldenummer: **22204125.3**

(22) Anmeldetag: **27.10.2022**

(51) Internationale Patentklassifikation (IPC):
**G05B 23/02** *(2006.01)*

(52) Gemeinsame Patentklassifikation (CPC):
**G05B 23/0283**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft
80333 München (DE)**

(72) Erfinder:
• **Dr. AGETHEN, Philipp
91056 Erlangen (DE)**
• **CHIKABALAPUR MANJUNATH, Supradeep
940409 Nürnberg (DE)**

• **MÜLHAUSEN, Timo
90482 Nürnberg (DE)**
• **ZHANG, Ke
68167 Mannheim (DE)**
• **LUCKNER, Tobias
90574 Rosstal (DE)**
• **BOCHE, Maik
90522 Oberasbach (DE)**
• **BÖLDERL-ERMEL, Wolfgang
90530 Wendelstein (DE)**
• **MAGBALOT, Ronald Dan
91056 Erlangen (DE)**

(74) Vertreter: **Siemens Patent Attorneys
Postfach 22 16 34
80506 München (DE)**

(54) **VERFAHREN UND VORRICHTUNG ZUR ERMITTLUNG EINER GESUNDHEITS-KENNZAHL EINER MASCHINE**

(57)     Um eine Gesundheits-Kennzahl (hx) einer Maschine (1) zu einem aktuellen Betrachtungszeitpunkt (t) und für zukünftige Betrachtungszeitpunkte (t') zu ermitteln, wird vorgeschlagen
- einen ersten zeitlichen Verlauf (10) einer Basis-Kennzahl (bx) über die Betriebszeit (t) abzubilden, wobei der erste zeitliche Verlauf der Basis-Kennzahl (bx) einen Zustand einer Referenz-Maschine (R1) zu dem Betrachtungszeitpunkt (t) in Abhängigkeit von der Betriebszeit (OT) wiedergibt und
eine über die Betriebszeit veränderliche Ist-Kennzahl (hi) mittels einer Individual-Funktion (MSE) zu errechnen, wobei der Individual-Funktion (MSE) als Eingangsgröße eine Leistungskennzahl (LK) der Maschine (1) zugeführt wird, welche über eine Maschinendaten-Erfassungseinheit (MDE) periodisch erfasst wird bzw. für zukünftige Betriebszeiten (t') prognostiziert wird,
wobei die Gesundheits-Kennzahl (hx) als ein zweiter zeitlicher Verlauf (20) dadurch dargestellt wird, dass die ermittelte Ist-Kennzahl (hi) bzw. die prognostizierte Ist-Kennzahl (hi) auf den ersten zeitlichen Verlauf (10) aufaddiert wird.

FIG 1

EP 4 361 748 A1

**Beschreibung**

Die Erfindung betrifft ein Verfahren zur Ermittlung einer Gesundheits-Kennzahl einer Maschine zu einem aktuellen Betrachtungszeitpunkt und zukünftige Betrachtungszeitpunkte, wobei die Gesundheits-Kennzahl einen Zustand der Maschine zu dem Betrachtungszeitpunkt in Abhängigkeit von einer Betriebszeit wiedergibt, dazu wird eine Basis-Funktion genutzt, welche einen ersten zeitlichen Verlauf einer Basis-Kennzahl über die Betriebszeit abbildet, wobei der erste zeitliche Verlauf der Basis-Kennzahl ein Zustand einer Referenz-Maschine zu dem Betrachtungszeitpunkt in Abhängigkeit von der Betriebszeit wiedergibt und entweder aus historischen Beobachtungen von einer eine Vielzahl an Maschinen dergleichen Art aufweisenden Gruppe oder aus wissensbasierten Erwartungen anhand von zumindest drei aufeinanderfolgenden Datenpunkten ermittelt wird, wobei die Basis-Kennzahl einen Zustand der Referenzmaschine zu den Betrachtungszeitpunkt in Abhängigkeit von einer Betriebszeit wiedergibt.

Heutzutage ist ein tatsächlicher Zustand und eine Verschlechterung einer Maschine für die beteiligten Maschinenbetreiber, Maschinenbauer und insbesondere Maschinenversicherer unbekannt. Ohne dieses Wissen über den tatsächlichen Zustand bzw. die zukünftigen Verschlechterungen sind die Themen wie ein Versicherungsrisiko, eine erwartete Lebensdauer und ein Restwert unbekannte Faktoren, welche bei einen Vertragsabschluss nur zu dem Zeitpunkt des Vertragsabschlusses einmal geschätzt werden können.

Demnach ist es für die beteiligten Parteien unklar, ob die ausgehandelten Bedingungen des Versicherungsvertrages der Realität noch entsprechen, sobald die Maschine ihren Produktionsbetrieb aufgenommen hat. Auch wäre es möglich, für die Versicherungen dynamische Versicherungsszenarien bereitzustellen, bei welchem die Tarife je nach Laufzeit angepasst werden können.

Es ist daher die Aufgabe der Erfindung eine Echtzeitbewertung des Zustands bzw. eine prognostizierte Verschlechterung der Maschine in Form eines Gesundheitsindexes bzw. einer Gesundheits-Kennzahl anzugeben, damit ein Maschinenversicherer seine Vertragsbedingungen und insbesondere seine Versicherungtarife anpassen kann.

Die Aufgabe wird für das eingangs genannte Verfahren dadurch gelöst, dass eine über die Betriebszeit veränderliche Ist-Kennzahl mittels einer Individual-Funktion errechnet wird, wobei die Individual-Funktion als Eingangsgröße eine Leistungs-Kennzahl der Maschine zugeführt wird, welche über eine Maschinendaten-Erfassungseinheit periodisch erfasst wird bzw. für zukünftige Betriebszeiten prognostiziert wird, wobei die Gesundheitskennzahl als ein zweiter zeitlicher Verlauf dadurch dargestellt wird, dass die ermittelte Ist-Kennzahl bzw. die prognostizierte Ist-Kennzahl auf den ersten zeitlichen Verlauf aufaddiert wird.

Die Erfinder haben erkannt, dass man für die Bestimmung der Gesundheits-Kennzahl eine andere Art von Daten betrachten muss, nämlich beispielsweise die Leistungs-Kennzahlen einer Maschine. Dazu ist zu sagen, dass Maschinendaten alle Informationen sind, die an einer Maschine anfallen und heute bereits über Maschinendaten-Erfassungseinheiten gesammelt werden bzw. in einer Cloudumgebung zur Verfügung gestellt werden. Grundsätzlich wird dabei zwischen zwei Datentypen unterschieden, nämlich Produkt- und Prozessdaten. Prozessdaten sind Informationen, die für den Betrieb einer Maschine erforderlich sind, sowie Informationen, die durch den Betrieb einer Maschine direkt erzeugt werden. Sie umfassen vor allem Steuerungs- sowie Verbrauchsdaten und helfen bei der Prozessüberwachung. Produktdaten sind Informationen, die während der Produktion entstehen. Sie werden an Verarbeitungseinheiten gemessen und geben Aufschluss über den Produktionsverlauf sowie die Qualität der Produktion. Ermittelt man nun eine Leistungs-Kennzahl einer Maschine, beispielsweise eine gefertigte Stückzahl, so sind dies nicht unbedingt Daten wie sie heutzutage bei Systemen feingranular gewonnen werden, sondern eher übergeordnete Daten, nämlich vielmehr nicht maschinentechnisch spezifische Daten. Bei bekannten Systemen werden maschinentechnisch spezifische Daten, welche sich feingranular auf Subkomponenten, wie Drehzahl, Temperatur, Drehmoment beziehen, erfasst. Diese feingranularen Daten können nicht für versicherungsbezogene Szenarien verwendet werden.

Mit Vorteil werden für die historischen Beobachtungen für die Basis-Kennzahl eine Stückzahl von gefertigten Einheiten pro Zeiteinheit der Referenz-Maschine als ein Beobachtungs-Parameter festgelegt, wobei für die periodische erfasste Leistungskennzahl ebenfalls eine Stückzahl von gefertigten Einheiten pro Zeiteinheit der Maschine gewählt wird, wobei eine Abweichung zwischen der Stückzahl der Referenzmaschine und der Stückzahl der Maschine als ein Faktor bereitgestellt wird und in der Individual-Funktion als ein Korrekturfaktor für die Berechnung der Ist-Kennzahl verwendet wird, wodurch letztendlich ein Ergebnis der Gesundheits-Kennzahl optimiert wird und damit der zweite zeitliche Verlauf derart beeinflusst wird, das er aussagekräftiger ist.

Man kann also sagen, je mehr eine Maschine produziert, umso mehr verschiebt sich der Gesundheitsindex zu einer unteren Grenze und im Gegensatz, wenn gar nichts produziert wird verschiebt sich der Index zu einer oberen Grenze.

Mit einer derartigen Echtzeit-Überwachung wird es möglich, den Gesundheitsindex bzw. die Gesundheits-Kennzahl einer Maschine dazu realitätsgetreu darzustellen. Versicherer als auch Maschinenbetreiber können sich nun eine Rückmeldung einholen, ob es sich bei der versicherten Maschine noch um den vertraglich vereinbarten Gegenstand handelt, insbesondere ob sich die versicherte Maschine noch in einem zulässigen Risikokorridor befindet.

Als weitere nicht maschinentechnisch spezifische Daten können Infrastruktur-Daten, insbesondere Geoinformations-Daten verwendet werden. Dazu wird der Individual-Funktion als weiterer Eingangsgröße ein Aufstellungsort der Maschine zugeführt, mit welchem Umweltfaktoren ermittelt werden, welche die Umwelteinflüsse auf die Maschine an dem Aufstellungsort der Maschine beschreiben, wobei in der Individual-Funktion zumindest ein Umweltfaktor als zumindest ein weiterer Korrekturfaktor für die Berechnung der Ist-Kennzahl verwendet wird, welcher die Gesundheits-Kennzahl und damit den zweiten zeitlichen Verlauf beeinflusst.

Unter Infrastruktur-Daten werden alle einrichtungsbezogenen Daten physischer oder institutioneller Art mit konkretem räumlichem Bezug subsumiert. Mit diesen Daten lassen sich Versorgungslagen und Netzstrukturen beschreiben und Zusammenhangsmuster mittels Geoinformationssystem identifizieren. Beispielsweise durch ein vorherrschendes Klima an einem Aufstellungsort kann die Gesamtheit aller metrologischen Erscheinungen innerhalb eines größeren Zeitraums für die bestimmte Region des Aufstellungsortes vorhergesagt werden. Bestimmte Faktoren für "Witterungsverhältnisse" sind somit bekannt. Demnach kann eine Sonneneinstrahlung, eine Starkregenbelastung, ein Wasserdampfgehalt der Luft, ein Wind, ein Luftdruck, eine Staubbelastung und eine $CO_2$-Belastung für die Lebenszeit der Maschine berücksichtigt werden.

Eine Bereitstellung der Gesundheits-Kennzahl wird weiterhin verbessert, wenn der Individual-Funktion als weitere Eingangsgröße ein Zeitraum zwischen zwei aufeinanderfolgenden Wartungen, also das zugrunde gelegte Wartungsintervall, und eine verbleibende Restzeit zum nächsten Wartungsintervall zugeführt wird, wobei in der Individual-Funktion die verbleibende Restzeit als ein weiterer Korrekturfaktor für die Berechnung der Ist-Kennzahl verwendet wird, welcher die Gesundheits-Kennzahl und damit den zweiten zeitlichen Verlauf beeinflusst.

Eine Wartung dient einer Verzögerung des vorhandenen Abnutzungspotentials. Wenn eine Wartung durchgeführt wird, bedeutet das im Wesentlichen die Minimierung des tatsächlichen Verschleißes von Bauteilen, Baugruppen und Subkomponenten. Dieses Ereignis einer Wartung und damit die Verlängerung der Lebensdauer wird für die Berechnung der Individual-Funktionen berücksichtigt.

Eine Bestimmung der Gesundheits-Kennzahl kann weiterhin verbessert werden, wenn die Maschine in Subkomponenten aufgeteilt wird und für jede Subkomponente ein Degradationsverlauf bereitgestellt wird, wobei in der Individual-Funktion die Degradation-Verläufe der Subkomponenten für die Berechnung der Ist-Kennzahl verwendet werden, nach einem Austausch einer Subkomponente durch ein Ersatzteil wird der zugehörige Degradationsverlauf für die Berechnung in der Individual-Funktion zeitlich verschoben und damit wird die Gesundheits-Kennzahl positiv beeinflusst wird.

Da eine Instandsetzung alle Maßnahmen zur Rückführung einer Betrachtungseinheit in den funktionsfähigen Zustand, bedeutet, d.h. die Bauteile der Subkomponenten werden eins zu eins ausgetauscht und somit wieder neuwertig, so findet dieser Neuzustand einer Subkomponente Berücksichtigung in der Berechnung der Gesundheitskennzahl.

Der bereits erwähnte Risikokorridor kann verfahrensgemäß dadurch veranschaulicht werden, wenn in einer Bildschirmansicht für eine Gesundheitsabschätzung der Maschine neben dem ersten zeitlichen Verlauf und dem zweiten zeitlichen Verlauf ein dritter zeitlicher Verlauf und ein vierter zeitlicher Verlauf dargestellt wird, wobei der dritte zeitliche Verlauf eine untere Grenze für einen zulässigen Bereich der Gesundheits-Kennzahl ist und der vierte zeitliche Verlauf eine obere Grenze für einen zulässigen Bereich der Gesundheits-Kennzahl ist, wobei für die Gesundheits-Abschätzung der Maschine eine dreistufige Bewertung durchgeführt wird, und für den Fall, dass sich die Gesundheits-Kennzahl mit ihren Wert oberhalb des ersten zeitlichen Verlaufs befindet, wird einem Zustandswert ein erster Zustand zugewiesen, für den Fall, dass sich die Gesundheits-Kennzahl mit ihren Wert unterhalb des ersten zeitlichen Verlaufs, aber noch oberhalb des dritten zeitlichen Verlaufs befindet, wird dem Zustandswert ein zweiter Zustand zugewiesen und für den Fall, dass sich die Gesundheits-Kennzahl mit ihrem Wert unterhalb des dritten zeitlichen Verlaufs befindet wird dem Zustandswert ein dritter Zustand zugewiesen.

In der Praxis haben sich für die untere und die obere Grenze jeweils ein 10% bzw. ein 90% Anteil aus den historischen Daten bei der Ermittlung des Basisindexes bewährt. Die dreistufige Bewertung kann vorteilhafter Weise in einer Ampeldarstellung angezeigt werden und zeigt somit grün für gut (erster Zustand), gelb für ausreichend (zweiter Zustand) und rot für mangelhaft (dritter Zustand) an.

Man hat nun mit Vorteil nicht eine Vielzahl von technischen Daten, beispielsweise von einer Spindel, von einem Antrieb oder von Temperatur und Bewegungssensoren, sondern man kann für versicherungsbezogene Szenario ein leicht verständlichen, einfachen KPI (Key Performance Index) wie z.B. die aufgezeigte Ampel mit ihren Farben rot, gelb, grün, verwenden.

Mit Vorteil kann demnach das Verfahren zur Anlagenberechnung einer Maschinenversicherung und zur Ermittlung von Versicherungstarifen für die Maschine genutzt werden, wobei der tatsächliche Zustand und die Verschlechterung der Maschine für einen Maschinenbetreiber und einen Versicherer visuell dargestellt wird und damit ein Versicherungsrisiko bestimmt werden kann, insbesondere können Versicherungstarife dynamisch angepasst werden. Kurz gesagt, es ist nun für alle Beteiligten Parteien klar, ob die ausgehandelten Bedingungen des Versicherungsvertrags der Realität entsprechen.

Für die Berechnung der Gesundheits-Kennzahl wird als Wesentlicher Vorteil die Bereitstellung bzw. die Ermittlung der Basisfunktion angesehen, die Basisfunktion bzw. ein Basisschätzer ist nicht speziell maschinentypisch, sondern vielmehr abhängig von der Betriebszeit und von der typischen Maschinenbenutzung. Zu diesen Zweck hat es sich als vorteilhaft herausgestellt, eine verallgemeinerte exponentielle zeitveränderliche Gleichung zu verwenden, die entweder historische Beobachtungen oder wissensbasierte Erwartungen widerspiegelt.

Dazu wird in der Basis-Funktion eine exponentielle Funktion genutzt, insbesondere folgende Funktion

$$ h(t) = 1 - d - exp\left(at^b\right) $$

und in der Individual-Funktion wird eine Funktion mit folgenden Unterfunktionen genutzt.

```
Ist-kennzahl(hi) =

A*K1 + B*K2 + C*K3 +D* Σ f(t, Subkomponenten (S1,S2,S3,S4).
```

Die eingangs genannte Aufgabe wird auch durch ein Rechnersystem gelöst. Das Rechnersystem ist ausgestaltet zur Ermittlung einer Gesamtheits-Kennzahl einer Maschine zu einem aktuellen Betrachtungszeitpunkt und für zukünftige Betrachtungszeitpunkte, wobei die Gesundheits-Kennzahl einen Zustand der Maschine zu den Betrachtungszeitpunkt in Abhängigkeit von einer Betriebszeit wiedergibt, umfassend ein Gesundheitsmodell mit einem Basis-Schätzer, welcher dazu ausgestaltet ist mit einer Basisfunktion einen ersten zeitlichen Verlauf einer Basis-Kennzahl über die Betriebszeit auf einer Bildschirmansicht abzubilden, wobei der erste zeitliche Verlauf der Basis-Kennzahl einen Zustand einer Referenzmaschine zu den Betrachtungszeitpunkt in Abhängigkeit von der Betriebszeit wiedergibt und entweder aus einer Datenbank und historischen Beobachtungen von einer eine Vielzahl an Maschinen der gleichen Art aufweisenden Gruppe oder aus einer Wissensdatenbank mit wissensbasierten Erwartungen anhand von zumindest drei aufeinanderfolgenden Datenpunkten ermittelt wird, wobei die Basis-Kennzahl einen Zustand der Referenzmaschine zu den Betrachtungszeitpunkt in Abhängigkeit von einer Betriebszeit wiedergibt, das Gesundheitsmodell weist weiterhin einen Maschinenschätzer auf, welcher ausgestaltet ist, mittels einer Individual-Funktion und eine über die Betriebszeit veränderliche Ist-Kennzahl zu errechnen, wobei der Individual-Funktion als Eingangsgröße eine Leistungskennzahl der Maschine zugeführt wird, welche über eine Maschinendaten-Erfassungseinheit periodische erfasst wird und in einem Speicher für Leistungs-Kennzahlen abholbar ist bzw. für zukünftige Betriebszeiten über ein Prognosemittel prognostizierbar ist, weiterhin aufweisend eine Berechnungseinheit, welche ausgestaltet ist, einen zweiten zeitlichen Verlauf als Gesundheits-Kennzahl dadurch bereitzustellen, dass die ermittelte Ist-Kennzahl bzw. die prognostizierte Ist-Kennzahl auf dem ersten zeitlichen Verlauf aufaddiert wird.

In einer weiteren Ausgestaltung des Rechnersystems sind in der Datenbank für die historischen Beobachtungen für die Basis-Kennzahl eine Stückzahl von gefertigten Einheiten pro Zeiteinheit der Referenz-Maschine als ein Beobachtungsparameter vorhanden, wobei weiterhin in den Leistungs-Kennzahldaten für die periodisch erfasste Leistungs-Kennzahl ebenfalls eine Stückzahl von gefertigten Einheiten pro Zeiteinheit der Maschine vorhanden ist, wobei die Individual-Funktion ausgestaltet ist, eine Abweichung zwischen der Stückzahl der Referenz-Maschine und der Stückzahl der Maschine als ein Korrekturfaktor in der Berechnung der Ist-Kennzahl zu verwenden, wodurch letztendlich ein Ergebnis der Gesundheits-Kennzahl optimiert wird und damit der zweite zeitliche Verlauf derart beeinflusst wird, dass er aussagekräftiger ist.

Weiterhin ist die Individual-Funktion in dem Rechnersystem so ausgestaltet, dass über die Maschinendaten-Erfassungseinheit Infrastrukturdaten abgefragt werden. Diese Infrastrukturdaten werden als weitere Eingangsgröße der Individual-Funktion zur Verfügung gestellt. Die Individual-Funktion ist demnach ausgestaltet einen Aufstellungsort der Maschine auszuwerten, weiterhin ausgestaltet daraus Umweltfaktoren zu ermitteln, welche die Umwelteinflüsse auf die Maschine an dem Aufstellungsort der Maschine beschreiben, wobei die Individual-Funktion ausgestaltet ist, zumindest einen Umweltfaktor als zumindest einen weiteren Korrekturfaktor für die Berechnung der Ist-Kennzahl zu verwenden.

Bei dem Rechnersystem ist die Individual-Funktion weiterhin ausgestaltet als weitere Eingangsgröße einen Zeitraum zwischen zwei aufeinanderfolgenden Wartungen, also das zugrunde gelegte Wartungsintervall, und eine verbleibende Restzeit zur nächsten Wartung auszuwerten, wobei die Individual-Funktion ausgestaltet ist, die verbleibende Restzeit als einen weiteren Korrekturfaktor für die Berechnung der Ist-Kennzahl zu verwenden.

Je kleiner die Restzeit desto geringer ist der spätere Gesundheitsindex bzw. die Gesundheits-Kennzahl. Das Rechnersystem verbessert seine Vorhersagequalität dadurch, dass die Individual-Funktion ausgestaltet ist, Degradation-Verläufe von Subkomponenten der Maschine auszuwerten, dazu ist eine Subkomponenten-Bibliothek vorhanden, wobei die Degradation-Verläufe den Subkomponenten der Maschine zugeordnet sind, wobei die Individual-Funktion ausgestaltet ist, die Degradation-Verläufe der Subkomponenten für die Berechnung der Ist-Kennzahl zu verwenden und mit vorschreitender Zeit die Ist-Kennzahl zu verkleinern, wobei das Gesundheitsmodell ausgestaltet ist, nach einem Austausch einer Subkomponente durch ein Ersatzteil den zugehörigen Degradation-Verläufe dieser ausgetauschten Subkomponente für die Berechnung in der Individual-Funktion zeitlich zu verschieben und damit die Gesundheits-Kennzahl positiv zu beeinflussen.

Weiterhin ist das Rechnersystem ausgestaltet in der Bildschirmansicht für die Gesundheits-Abschätzung der Maschine neben dem ersten zeitlichen Verlauf und dem zweiten zeitlichen Verlauf einen dritten zeitlichen Verlauf und einen vierten zeitlichen Verlauf darzustellen, wobei der dritte zeitliche Verlauf als eine untere Grenze für einen zulässigen Bereich der Gesundheits-Kennzahl ausgestaltet ist und der vierte zeitliche Verlauf als eine obere Grenze für einen zulässigen Bereich der Gesundheits-Kennzahl ausgestaltet ist, wobei für die Gesundheits-Abschätzung der Maschine ein Abschätzungsmittel vorhanden ist, welches ausgestaltet ist eine dreistufige Bewertung durchzuführen und für den Fall, dass sich die Gesundheits-Kennzahl mit ihren Wert 1. Oberhalb des zeitlichen Verlaufs befindet wird einem Zustandswert ein erster Zustand zugewiesen, für den Fall, dass sich die Gesundheits-Kennzahl mit ihren Wert 2. Unterhalb des zeitlichen Verlaufs aber noch oberhalb des dritten zeitlichen Verlaufs befindet wird dem Zustandswert ein zweiter Zustand zugewiesen und für den Fall das sich die Gesundheits-Kennzahl mit ihrem Wert unterhalb des dritten zeitlichen Verlaufs befindet wird dem Zustandswert ein dritter Zustand zugewiesen.

Nun hat man in einer anschaulichen Art und Weise eine dreistufige Bewertung nach Art einer Ampel, z.B. grün, gelb und rot. In dem durch die obere Grenze und die untere Grenze aufgespannten Risikokorridor kann man nun anhand der Farben das Risiko einfach darstellen.

Das Rechnersystem ist ausgestaltet, zur Online-Berechnung einer Maschinenversicherung und zur Ermittlung von Versicherungstarifen, wobei der tatsächliche Zustand und die Verschlechterung der Maschine für einen Maschinenbetreiber und einen Versicherer visuell auf der Bildschirmansicht darstellbar ist und damit bilateral ein Versicherungsrisiko bestimmt werden kann, insbesondere ausgestaltet die Versicherungstarife dynamisch anzupassen.

Nun ist es mit Vorteil für alle beteiligten Parteien bei Vertragsabschluss klar, ob die ausgehandelten Bedingungen realistisch oder noch gültig sind.

Die Zeichnung zeigt ein Ausführungsbeispiel der Erfindung, dabei zeigt die

FIG 1    ein Rechnersystem angeschlossen über eine Maschinendaten-Erfassungseinheit an einer Maschine,

FIG 2    eine Bildschirmansicht zur Darstellung einer Gesundheits-Kennzahl,

FIG 3    eine Abhängigkeit einer Auswirkung auf die Gesundheits-Kennzahl bezogen auf eine zu fertigende Stückzahl einer Referenzmaschine,

FIG 4    Auswirkungen des von Wartungsintervallen auf die Gesundheits-Kennzahl,

FIG 5    Auswirkungen von Subkomponenten auf die Gesundheits-Kennzahl und

FIG 6    Vertragspartner beim Abschluss einer MaschinenVersicherung.

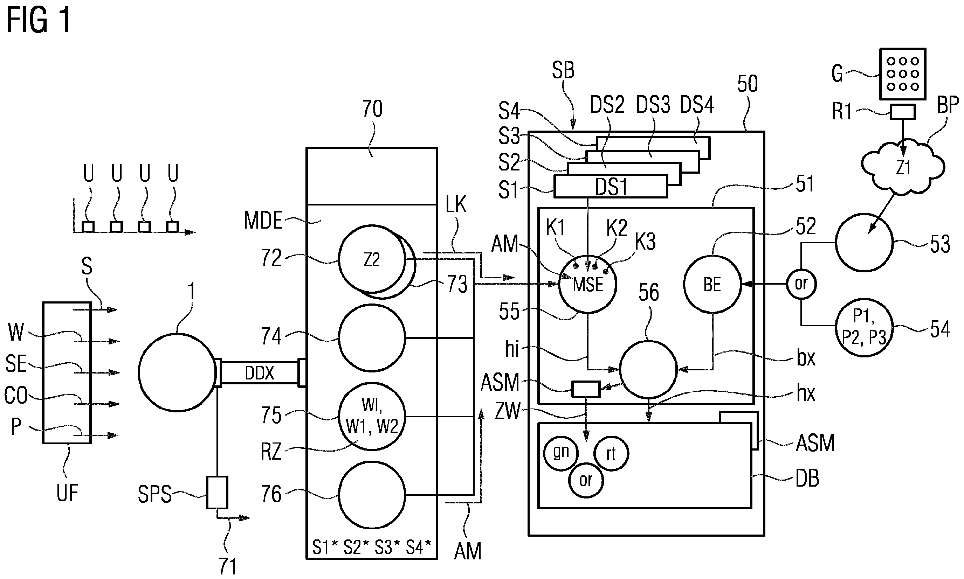

Gemäß der FIG 1 ist eine Maschine 1 dargestellt, welche Einheiten U fertigt. Die Maschine 1 wird über eine Steuerung SPS gesteuert. Die Maschine 1 und die Steuerung SPS stehen über einen Datenkanal DDX mit einer Maschinendaten-Erfassungseinheit MDE in Verbindung. Die Steuerung SPS liefert Prozessdaten 71, welche insbesondere Temperaturen, Drehzahl, Drücke, Vibrationen, Geräusche beinhalten, also feingranulare maschinenspezifisch technische Daten enthalten. Es werden aber auch Produktdaten 70, welche Leistungs-Kennzahlen MLK, wie z.B. Stückzahlen, umfassen erfasst. Je nach Aufstellungsort 74 der Maschine 1 wirken Umweltfaktoren UF auf die Maschine 1 ein. Mögliche Umweltfaktoren UF sind in diesem Beispiel eine Sonneneinstrahlung S, ein Wasserdampfgehalt W, eine Staubbelastung St, eine $CO_2$-Belastung CO und ein Luftdruck P.

Das Rechnersystem 50 ist ausgestaltet zur Ermittlung einer Gesundheits-Kennzahl hx der Maschine 1 zu einem aktuellen Betrachtungszeitpunkt t und für zukünftige Betrachtungszeitpunkte t', wobei die Gesundheits-Kennzahl hx einen Zustand der Maschine 1 zu den Betrachtungszeitpunkten t in Abhängigkeit von einer Betriebszeit OT wiedergibt.

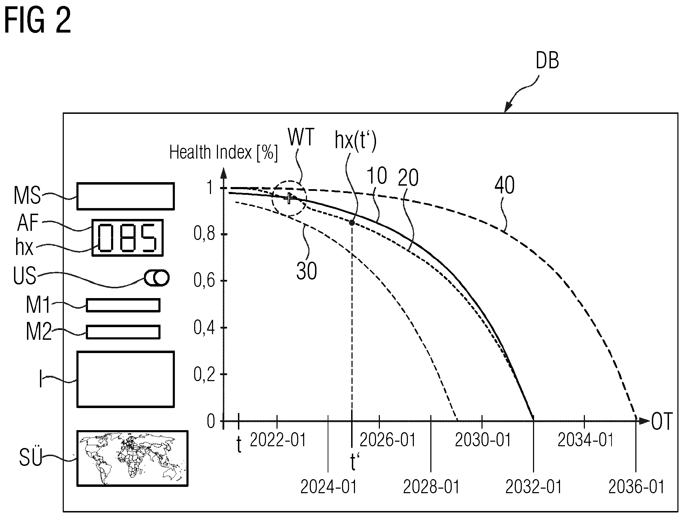

Das Rechnersystem 50 weist ein Gesundheits-Modell 51 auf, welches wiederum einen Basis-Schätzer 52, einen Maschinenschätzer 55 und eine Berechnungseinheit 56 aufweist. Der Basis-Schätzer 52 ist dazu ausgestaltet mit einer Basis-Funktion BE einen ersten zeitlichen Verlauf 10 (siehe FIG 2) einer Basis-Kennzahl bx über die Betriebszeit OT auf einer Bildschirmansicht DB abzubilden, der erste zeitliche Verlauf 10 der Basis-Kennzahl bx gibt einen Zustand einer Referenz-Maschine R1 zu dem Betrachtungszeitpunkt t in Abhängigkeit von der Betriebszeit OT wieder. Die Basisfunktion BE wird entweder aus einer Datenbank 53 mit historischen Beobachtungen von einer Vielzahl an Maschinen dergleichen Art aufweisenden Gruppe G oder aus einer Wissensdatenbank 54 mit wissensbasierten Erwartungen anhand von zumindest drei aufeinanderfolgenden Datenpunkten P1, P2, P3 ermittelt. Für eine spätere stückzahlabhängige Betrachtung werden als Beobachtungsparameter BP zumindest eine erste Stückzahl Z1 eingeführt. Die Basis-Kennzahl bx gibt einen Zustand der Referenzmaschine R1 zu den Betrachtungszeitpunkten t in Abhängigkeit von einer Betriebszeit OT wieder.

Das Gesundheits-Modell 51 arbeitet demnach mit dem Maschinenschätzer 55 und dem Basis-Schätzer 52 derart zusammen, dass über die Berechnungseinheit 56 die Gesundheits-Kennzahl hx bereitgestellt wird. Der Maschinenschätzer 55 ist dabei dazu ausgestaltet, mittels einer Individual-Funktion MSE über die Betriebszeit t veränderliche Ist-Kennzahl hi zu errechnen, wobei der Individual-Funktion MSE als Eingangsgröße eine Leistungs-Kennzahl LK der Maschine 1 zugeführt wird. Die Leistungs-Kennzahl LK wird über die Maschinendaten-Erfassungseinheit MDE periodisch erfasst und in einem Speicher für Leistungs-Kennzahldaten 72 abholbereit hinterlegt bzw. wird die Leistungs-Kennzahl LK für zukünftige Betriebszeiten t' über ein Prognosemittel 73 prognostiziert.

Die Berechnungseinheit 56 ist nun ausgestaltet einen zweiten zeitlichen Verlauf 20 (siehe FIG 2) als Gesundheits-Kennzahl hx dadurch bereitzustellen, dass die ermittelte Ist-Kennzahl hi bzw. die prognostizierte Ist-Kennzahl hi auf den ersten zeitlichen Verlauf 10 aufaddiert wird.

Die zeitlichen Verläufe 10,20 werden in einer Bildschirmansicht DB (Dashboard) dargestellt. Die Maschinendaten-Erfassungseinheit MDE liefert eine zweite Stückzahl Z2 über die Menge von gefertigten Einheiten U pro Zeiteinheit. In der Datenbank 53 für die historischen Beobachtungen für die Basis-Kennzahl bx ist ebenfalls eine Stückzahl hinterlegt, nämlich eine erste Stückzahl Z1 von gefertigten Einheiten U pro Zeiteinheit der Referenzmaschine R1 als ein Beobachtungsparameter. Die Individual-Funktion MSE ist nun ausgestaltet, eine Abweichung zwischen der Stückzahl Z1 der Referenzmaschine R1 und der Stückzahl Z2 der Maschine 1 als ein Korrekturfaktor K1 in der Berechnung der Ist-Kennzahl zu verwenden. Mit dieser Berechnung wird letztendlich ein Ergebnis der Gesundheits-Kennzahl hx optimiert und damit wird der zweite zeitliche Verlauf 20 derart beeinflusst, dass er aussagekräftiger ist.

In der Maschinendaten-Erfassungseinheit MDE werden weiterhin Infrastrukturdaten erfasst und abgespeichert welche der Individual-Funktion MSE als weitere Eingangsgrößen, beispielsweise ein Aufstellungsort 74 der Maschine 1 zur Verfügung gestellt werden. Die Individual-Funktion MSE ist nun ausgestaltet Umweltfaktoren UF am Ausstellungsort 74 zu ermitteln, wobei die Umweltfaktoren UF die Umwelteinflüsse auf die Maschine 1 an dem Aufstellungsort 74 der Maschine 1 beschreiben. Die Individual-Funktion MSE ist nun ausgestaltet, zumindest einen Umweltfaktor UF als zumindest einen weiteren Korrekturfaktor K2 für die Berechnung der Ist-Kennzahl hi zu verwenden. Ist aufgrund der klimatischen Gegebenheiten am Aufstellungsort 74, beispielsweise ein Wasserdampfgehalt W extrem hoch so wirkt sich dies in der Individual-Funktion MSE negativ auf den zu berechnenden Gesundheitsindex hx aus.

Auch ist die Individual-Funktion MSE ausgestaltet, als weitere Eingangsgröße einen Zeitraum zwischen zwei aufeinanderfolgenden Wartungen W1,W2, also das zugrunde gelegte Wartungsintervall WI und eine verbleibende Restzeit RZ zur nächsten Wartung W2 auszuwerten. Dabei ist die Individual-Funktion MSE derart ausgestaltet, die verbleibende Restzeit RZ als ein weiteren Korrekturfaktor K3 für die Berechnung der Ist-Kennzahl hi zu verwenden.

Die Individual-Funktion MSE wird für die Berechnung der Gesundheits-Kennzahl hx der Maschine 1 weiter optimiert, wenn die Individual-Funktion MSE ausgestaltet ist, Degradations-Verläufe DS1,DS2,DS3,DS4 von Subkomponenten S1,S2,S3,S4 der Maschine 1 auszuwerten. Es ist demnach eine Subkomponenten-Bibliothek SB vorhanden, welches eine erste Subkomponenten S1, eine zweite Subkomponente S2, eine dritte Subkomponente S3 und eine vierte Subkomponente S4 beschreibt. Die erste Subkomponente S1 könnte beispielsweise ein Motor sein, die zweite Subkomponente S2 könnten beispielsweise eine Anordnung von Rotorblätter einer Verdichtungsmaschine sein, die dritte Subkomponente S3 könnte ein Schutzschild sein und die vierte Subkomponente S4 ein Elektronikmodul sein.

Den Subkomponenten S1,...,S4 sind dementsprechend ihren Degradations-Verläufen DS1,...,DS4 zugeordnet, wobei die Individual-Funktion MSE ausgestaltet ist, die Degradations-Verläufe DS1,...,DS4 der Subkomponenten S1,...,S4 für die Berechnung der Ist-Kennzahl hi zu verwenden und mit fortschreitender Zeit die Ist-Kennzahl hi zu verkleinern. Dabei ist das Gesundheitsmodell 51 ausgestaltet nach einem Austausch einer Subkomponente S1,...,S4 durch ein Ersatzteil den zugehörigen Degradations-Verlauf DS1,...,DS4 für diese ausgetauschte Subkomponente S1,S2,S3,S4 (S1*,S2*,S3*,S4*) für die Berechnung in der Individualfunktion MSE zeitlich zu verschieben und damit die Gesundheits-Kennzahl hx positiv zu beeinflussen.

Weiterhin weist das Gesundheitsmodell 51 ein Abschätzungsmittel ASM auf, welches ausgestaltet ist eine 3-stufige Bewertung durchzuführen und für den Fall, dass sich die Gesundheits-Kennzahl hx mit ihrem Wert (siehe FIG 2) oberhalb des ersten zeitlichen Verlaufs 10 befindet, einen Zustandswert ZW einen ersten Zustand gn zuzuweisen. Für den Fall, dass sich die Gesundheits-Kennzahl hx mit ihrem Wert unterhalb des ersten zeitlichen Verlaufs 10, aber noch oberhalb eines dritten zeitlichen Verlaufs 30 befindet, dm Zustandswert ZW einen zweiten Zustand or zuzuweisen. Für den Fall, dass sich die Gesundheits-Kennzahl hx mit ihrem Wert unterhalb des dritten zeitlichen Verlaufs 30 befindet, wird dem Zustandswert ZW ein dritter Zustand rt zugewiesen.

Gemäß FIG 2 werden die zeitlichen Verläufe 10,20 der Gesundheits-Kennzahl hx bzw. der Basis-Kennzahl bx über die Betriebszeit OT abgebildet. Die Bildschirmansicht DB ist damit in einen Bereich für die zeitlichen Verläufe und in einen Bereich für Menüs bzw. weitere Anzeigefelder aufgeteilt und ausgestaltet. Über einen Maschinenselektor MS lässt sich eine zu betrachtende Maschine 1 auswählen. Ein Ausgabefenster AF zeigt die aktuell ermittelte Gesundheits-Kennzahl hx an. Ein Umschalter US lässt sich auf einen Prognosemodus einstellen. Ein erstes Auswahlmenü M1 lässt eine Auswahl von verschiedenen Stückzahlen zu. Ein zweites Auswahlmenü M2 lässt zu, ob man eine Wartung mit einberechnen will oder nicht. Ein Maschineninfofeld I zeigt relevante Maschinendaten an.

Der erste zeitliche Verlauf 10 stellt somit eine Basis-Kennzahl bx über die Betriebszeit t dar, wobei der erste zeitliche Verlauf 10 der Basis-Kennzahl bx ein Zustand der Referenzmaschine R1 zu dem Betrachtungszeitpunkt t in Abhängigkeit von der Betriebszeit OT wiedergibt. Die Gesundheits-Kennzahl hx wird als der zweite zeitliche Verlauf 20 dargestellt und errechnet sich aus der ermittelten Ist-Kennzahl hi plus die Addition der Basis-Kennzahl bx. Der dritte zeitliche Verlauf 30 bildet eine untere Grenze und der vierte zeitliche Verlauf 40 bildet eine obere Grenze, damit wird um den zweiten zeitlichen Verlauf 20 ein Risikokorridor aufgespannt. Für eine rasche und visuelle Gesundheits-Abschätzung der Maschine 1 kann eine dreistufige Bewertung durchgeführt werden, dazu wird der Zustandswert ZW abgefragt und bei einem ersten Zustand gn wird die Farbe Grün angezeigt, bei einem zweiten Zustand or wird die Farbe Orange angezeigt und bei einem dritten Zustand rt wird die Farbe Rot angezeigt. Bei einem Zeitpunkt WT ist die Maschine 1 wohl gewartet worden und es zeigt sich ein Sprung der Gesundheits-Kennzahl hx bzw. wird ein Sprung im zweiten zeitlichen Verlauf zur oberen Grenze.

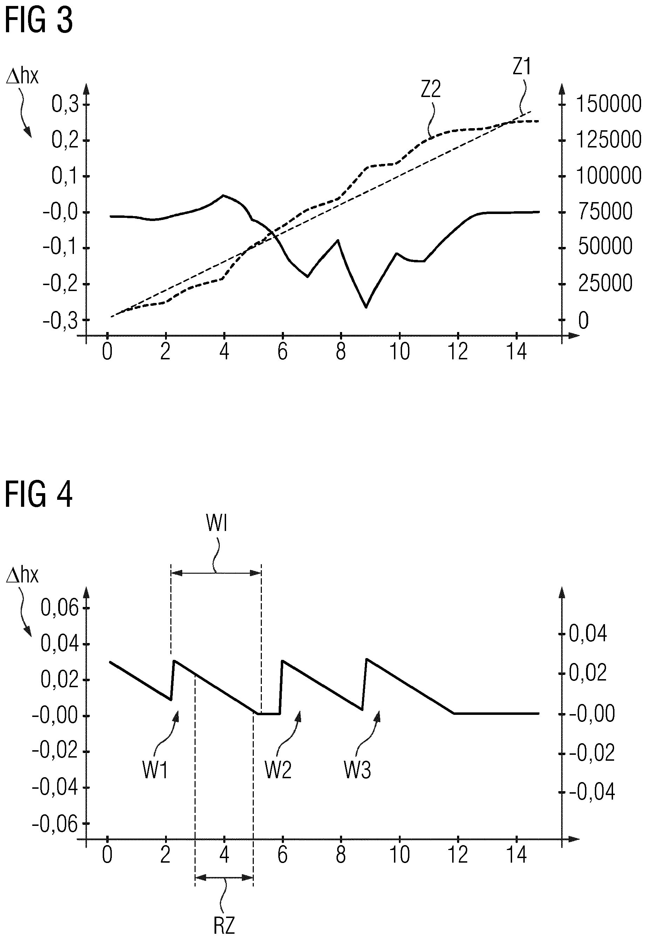

Gemäß FIG 3 wird der Einfluss der zu fertigenden Stückzahlen Z1,Z2 von gefertigten Einheiten U sichtbar. Die gefertigte Stückzahl Z1 der Referenzmaschine R1 ist eine lineare Funktion. Betrachtet man nun die Stückzahl Z2 der Maschine 1 dann kann man daraus schließen, wenn die gefertigte Stückzahl Z2 über der Stückzahl Z1 der Referenzmaschine R1 liegt, sich dies negativ auf die Gesundheits-Kennzahl hx auswirkt und es dementsprechend ein Effekt Δhx auf den Gesundheits-Index hx gibt.

Gemäß FIG 4 wird der Effekt auf den Gesundheits-Index Δhx am Beispiel von erfolgten Wartungsintervallen gezeigt. Wird eine Wartung W1 durchgeführt, so hat dies einen positiven Effekt Δhx auf die Gesundheits-Kennzahl hx, aber schon mit fortschreitender Zeit nimmt dieser Effekt wieder ab bis zu einer zweiten Wartung W2, dann gibt es wieder einen positiven Effekt ΔHX auf den Gesundheits-Index hx bis zu einer dritten Wartung W3 usw.. Die Individual-Funktion MSE wertet nun den Zeitraum zwischen zwei aufeinanderfolgenden Wartungen W1,W2 aus und eine verbleibende Restzeit RZ zum nächsten Wartungsintervall wird derart ausgewertet, dass er als Korrekturfaktor K3 mit ablaufender Zeit die Gesundheits-Kennzahl hx verkleinert.

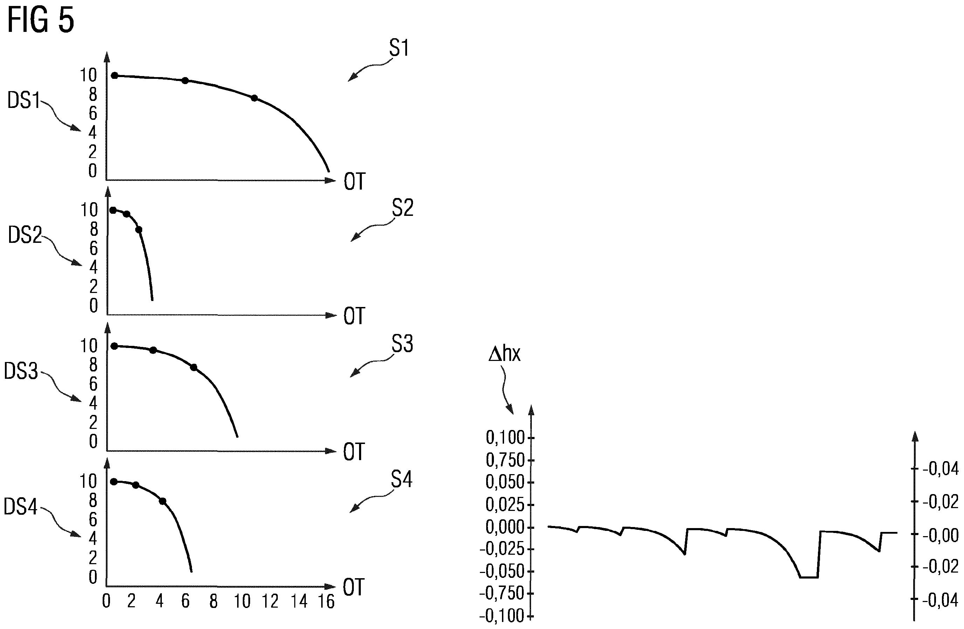

Gemäß FIG 5 sind für die Subkomponenten S1,S2,S3,S4 jeweils die Degradations-Verläufe DS1,DS2,DS3,DS4 dargestellt. Die Maschine 1 ist demnach in die Subkomponenten S1,...,S4 aufgeteilt und jede Subkomponente S1,...,S4 hat einen spezifischen Degradations-Verlauf DS1,...,DS4. Die Individual-Funktion MSE verwendet die Degradations-Verläufe DS1,...,DS4 für die Berechnung der Ist-Kennzahl hi. Das Besondere ist hier, dass in Bezug auf eine Instandhaltung nach einem Austausch einer Subkomponente S1,...,S4 durch ein Ersatzteil der zugehörige Degradations-Verlauf DS1,...,DS4 für die Berechnung in der Individual-Funktion MSE zeitlich verschoben wird und damit eine positive Auswertung auf die Gesundheits-Kennzahl hx hat.

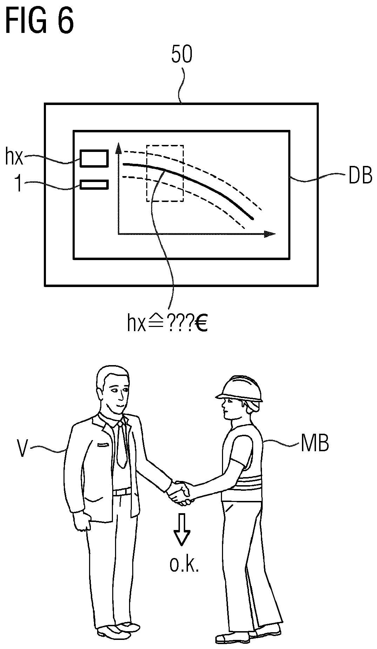

Die FIG 6 zeigt einen Versicherer V und einen Maschinenbetreiber MB bei Vertragsverhandlungen bezüglich der zu versichernden Maschine 1. Die Bildschirmansicht DB mit den zeitlichen Verläufen und insbesondere dem Risikokorridor bietet dem Versicherer V und dem Maschinenbetreiber MB nun eine gute Basis um im gegenseitigen Einvernehmen eine für beide Seiten gerechten Versicherungstarif € für die Maschine 1 zu ermitteln.

**Patentansprüche**

1. Verfahren zur Ermittlung einer Gesundheits-Kennzahl (hx) einer Maschine (1) zu einem aktuellen Betrachtungszeitpunkt (t) und für zukünftige Betrachtungszeitpunkte (t'),

 wobei die Gesundheits-Kennzahl (hx) einen Zustand der Maschine (1) zu dem Betrachtungszeitpunkt (t) in Abhängigkeit von einer Betriebszeit (OT) wiedergibt, dazu wird eine Basis-Funktion (BE) genutzt, welche

 - einen ersten zeitlichen Verlauf (10) einer Basis-Kennzahl (bx) über die Betriebszeit (t) abbildet, wobei der erste zeitliche Verlauf der Basis-Kennzahl (bx) einen Zustand einer Referenz-Maschine (R1) zu dem Betrachtungszeitpunkt (t) in Abhängigkeit von der Betriebszeit (OT) wiedergibt und entweder

 - aus historischen Beobachtungen von einer eine Vielzahl an Maschinen der gleichen Art aufweisenden Gruppe (G) oder
 - aus wissensbasierten Erwartungen anhand von zumindest drei aufeinander folgenden Datenpunkten (P1,P2,P3) ermittelt wird,
 - wobei die Basis-Kennzahl (bx) einen Zustand der Referenz-Maschine (R1) zu dem Betrachtungszeitpunkt (t) in Abhängigkeit von einer Betriebszeit (OT) wiedergibt,

 **dadurch gekennzeichnet, dass**
 eine über die Betriebszeit (OT) veränderliche Ist-Kennzahl (hi) mittels einer Individual-Funktion (MSE) errechnet wird, wobei der Individual-Funktion (MSE) als Eingangsgröße eine Leistungskennzahl (LK) der Maschine (1) zugeführt wird, welche über eine Maschinendaten-Erfassungseinheit (MDE) periodisch erfasst wird bzw. für zukünftige Betriebszeiten (t') prognostiziert wird,
wobei die Gesundheits-Kennzahl (hx) als ein zweiter zeitlicher Verlauf (20) dadurch dargestellt wird, dass die ermittelte Ist-Kennzahl (hi) bzw. die prognostizierte Ist-Kennzahl (hi) auf den ersten zeitlichen Verlauf (10) aufaddiert wird.

2. Verfahren nach Anspruch 1,
wobei für die historischen Beobachtungen für die Basis-Kennzahl (bx) eine Stückzahl (Z1) von gefertigten Einheiten (U) pro Zeiteinheit der Referenz-Maschine (R1) als ein Beobachtungs-Parameter (BP) festgelegt wird, wobei für die periodisch erfasste Leistungskennzahl (LK) ebenfalls eine Stückzahl (Z2) von gefertigten Einheiten (U) pro Zeiteinheit der Maschine (1) gewählt wird, wobei eine Abweichung zwischen der Stückzahl (Z1) der Referenz-Maschine (R1) und der Stückzahl (Z2) der Maschine (1) als ein Faktor bereitgestellt wird und in der Individual-Funktion (MSE) als ein Korrekturfaktor (k1) für die Berechnung der Ist-Kennzahl (hi) verwendet wird, wodurch letztlich ein Ergebnis der Gesundheits-Kennzahl (hx) optimiert wird und damit der zweite zeitliche Verlauf (20) derart beeinflusst wird, dass er aussagekräftiger ist.

3. Verfahren nach Anspruch 1 oder 2,
wobei der Individual-Funktion (MSE) als weitere Eingangsgröße ein Aufstellungsort (74) der Maschine (1) zugeführt wird, mit welchen Umweltfaktoren (UF) ermittelt werden, welche die Umwelteinflüsse auf die Maschine (1) an dem Aufstellungsort (74) der Maschine (1) beschreiben, wobei in der Individual-Funktion (MSE) zumindest ein Umweltfaktor (UF) als zumindest ein weiterer Korrekturfaktor (K2) für die Berechnung der Ist-Kennzahl (hi) verwendet wird, welcher die Gesundheits-Kennzahl (hx) und damit den zweiten zeitlichen Verlauf (20) beeinflusst.

4. Verfahren nach einem der Ansprüche 1 bis 3,
wobei der Individual-Funktion (MSE) als weitere Eingangsgröße ein Zeitraum zwischen zwei aufeinanderfolgenden Wartungen, also das zugrunde gelegte Wartungsintervall (WI), und eine verbleibende Restzeit (RZ) zum nächsten Wartungsintervall (WI) zugeführt wird, wobei in der Individual-Funktion (MSE) die verbleibende Restzeit (RZ) als ein weiterer Korrekturfaktor (K3) für die Berechnung der Ist-Kennzahl (hi) verwendet wird, welcher die Gesundheits-Kennzahl (hx) und damit den zweiten zeitlichen Verlauf (20) beeinflusst.

5. Verfahren nach einem der Ansprüche 1 bis 4, wobei die Maschine (1) in Subkomponenten (S1,S2,S3,S4) aufgeteilt wird und für jede Subkomponente (S1,S2,S3,S4) ein Degradations-Verlauf (DS1,DS2,DS3,DS4) bereitgestellt wird, wobei in der Individual-Funktion (MSE) die Degradations-Verläufe (DS1,DS2, DS3,DS4) der Subkomponenten (S1,S2,S3,S4) für die Berechnung der Ist-Kennzahl (hi) verwendet werden, wobei nach einem Austausch einer Subkomponente (S1,S2,S3,S4) durch ein Ersatzteil der zugehörige Degradations-Verlauf (DS1,DS2,DS3,DS4) für die Berechnung in der Individual-Funktion (MSE) zeitlich verschoben wird und damit die Gesundheits-Kennzahl (hx) positiv beeinflusst wird.

6. Verfahren nach einem der Ansprüche 1 bis 5, wobei in einer Bildschirmansicht (DB) für eine Gesundheits-Abschätzung der Maschine (1) neben dem ersten zeitlichen Verlauf (10) und dem zweiten zeitlichen Verlauf (20) ein dritter zeitlicher Verlauf (30) und ein vierter zeitlicher Verlauf (40) dargestellt wird, wobei der dritte zeitliche Verlauf (30) eine untere Grenze für einen zulässigen Bereich der Gesundheits-Kennzahl (hx) ist und der vierte zeitliche Verlauf (40) eine obere Grenze für einen zulässigen Bereich der Gesundheits-Kennzahl (hx) ist, wobei für die Gesundheits-Abschätzung der Maschine (1) eine 3-stufige Bewertung durchgeführt wird, und für den Fall, dass sich die Gesundheits-Kennzahl (hx) mit ihrem Wert oberhalb des ersten zeitlichen Verlaufs (10) befindet wird einem Zustandswert (ZW) ein erster Zustand (gn) zugewiesen, für den Fall, dass sich die Gesundheits-Kennzahl (hx) mit ihrem Wert unterhalb des ersten zeitlichen Verlaufs (10), aber noch oberhalb des dritten zeitlichen Verlaufs (30) befindet wird dem Zustandswert (ZW) ein zweiter Zustand (or) zugewiesen und für den Fall, dass sich die Gesundheits-Kennzahl (hx) mit ihrem Wert unterhalb des dritten zeitlichen Verlaufs (30) befindet wird dem Zustandswert (ZW) ein dritter Zustand (rt) zugewiesen.

7. Verfahren nach einem der Ansprüche 1 bis 6, welches genutzt wird zur Online-Berechnung einer Maschinenversicherung und zur Ermittlung von Versicherungstarifen (€), wobei der tatsächliche Zustand und die Verschlechterung der Maschine (1) für einen Maschinenbetreiber (MB) und einem Versicherer (V) visuell dargestellt wird und damit ein Versicherungsrisiko bestimmt werden kann, insbesondere können Versicherungstarife dynamisch angepasst werden.

8. Verfahren nach einem der Ansprüche 2 bis 7, wobei in der Basis-Funktion (BE) eine exponentielle Funktion genutzt wird, insbesondere folgende Funktion:

$$h(t) = 1 - d - exp\left(at^b\right) \ ,$$

und in der
Individual-Funktion (MSE) eine Funktion mit folgenden Unterfunktionen genutzt wird

```
Ist-kennzahl(hi) =
A*K1 + B*K2 + C*K3 +D* Σ f(t, Subkomponenten (S1,S2,S3,S4).
```

9. Rechnersystem (50) ausgestaltet zur Ermittlung einer Gesundheits-Kennzahl (hx) einer Maschine (1) zu einem aktuellen Betrachtungszeitpunkt (t) und für zukünftige Betrachtungszeitpunkte (t'),
wobei die Gesundheits-Kennzahl (hx) einem Zustand der Maschine (1) zu dem Betrachtungszeitpunkt (t) in Abhängigkeit von einer Betriebszeit (OT) wiedergibt, umfassend ein Gesundheits-Modell (51) mit

- einem Basis-Schätzer (52), welcher dazu ausgestaltet ist mit einer Basis-Funktion (BE) einen ersten zeitlichen Verlauf (10) einer Basis-Kennzahl (bx) über die Betriebszeit (t) auf einer Bildschirmansicht (DB) abzubilden, wobei der erste zeitliche Verlauf der Basis-Kennzahl (bx) einen Zustand einer Referenz-Maschine (R1) zu dem Betrachtungszeitpunkt (t) in Abhängigkeit von der Betriebszeit (OT) wiedergibt und entweder

   - aus einer Datenbank (53) mit historischen Beobachtungen von einer eine Vielzahl an Maschinen der gleichen Art aufweisenden Gruppe (G) oder
   - aus Wissensdatenbank (54) mit wissensbasierten Erwartungen anhand von zumindest drei aufeinander folgenden Datenpunkten (P1,P2,P3) ermittelt wird,
   - wobei die Basis-Kennzahl (bx) einen Zustand der Referenz-Maschine zu dem Betrachtungszeitpunkt (t) in Abhängigkeit von einer Betriebszeit (OT) wiedergibt,

**dadurch gekennzeichnet, dass**
das Gesundheits-Modell (51) weiterhin

   - einen Maschinenschätzer (55) aufweist, welcher ausgestaltet ist mittels einer Individual-Funktion (MSE) eine über die Betriebszeit (t) veränderliche Ist-Kennzahl (hi) zu errechnen, wobei der Individual-Funktion (MSE) als Eingangsgröße eine Leistungskennzahl (LK) der Maschine (1) zugeführt wird, welche über eine Maschinendaten-Erfassungseinheit (MDE) periodisch erfasst wird und in einem Speicher für Leistungskennzahldaten (72) abholbar ist bzw. für zukünftige Betriebszeiten (t') über ein Prognosemittel (73) prognostizierbar ist, weiterhin aufweisend
   - eine Berechnungseinheit (56), welche ausgestaltet ist einen zweiten zeitliche Verlauf (20) als Gesundheits-Kennzahl (hx) dadurch bereitzustellen, dass die ermittelte Ist-Kennzahl (hi) bzw. die prognostizierte Ist-Kennzahl (hi) auf den ersten zeitlichen Verlauf (10) aufaddiert wird.

10. Rechnersystem (50) nach Anspruch 9,
wobei in der Datenbank (53) für die historischen Beobachtungen für die Basis-Kennzahl (bx) eine Stückzahl (Z1) von gefertigten Einheiten (U) pro Zeiteinheit der Referenz-Maschine (R1) als ein Beobachtungs-Parameter (BP) vorhanden ist, wobei weiterhin in den Leistungskennzahldaten (72) für die periodisch erfasste Leistungskennzahl (LK) ebenfalls eine Stückzahl (Z2) von gefertigten Einheiten (U) pro Zeiteinheit der Maschine (R1) vorhanden ist, wobei die Individual-Funktion (MSE) ausgestaltet ist eine Abweichung zwischen der Stückzahl (Z1) der Referenz-Maschine (R1) und der Stückzahl (Z2) der Maschine (1) als ein Korrekturfaktor (k1) in die Berechnung der Ist-Kennzahl (hi) zu verwenden, wodurch letztlich ein Ergebnis der Gesundheits-Kennzahl (hx) optimiert wird und damit der zweite zeitliche Verlauf (20) derart beeinflusst wird, das er aussagekräftiger ist.

11. Rechnersystem (50) nach Anspruch 9 oder 10,
wobei in der Maschinendaten-Erfassungseinheit (MDE) Infrastrukturdaten vorhanden sind und der Individual-Funktion (MSE) ausgestaltet ist als weitere Eingangsgröße einen Aufstellungsort (74) der Maschine (1) auszuwerten, weiterhin ausgestaltet daraus Umweltfaktoren (UF) zu ermitteln, welche die Umwelteinflüsse auf die Maschine (1)

an dem Aufstellungsort (74) der Maschine (1) beschreiben, wobei die Individual-Funktion (MSE) ausgestaltet ist zumindest einen Umweltfaktor (UF) als zumindest einen weiteren Korrekturfaktor (K2) für die Berechnung der Ist-Kennzahl (hi) zu verwenden.

12. Rechnersystem (50) nach einem der Ansprüche 9 bis 11, wobei die Individual-Funktion (MSE) ausgestaltet ist als weitere Eingangsgröße einen Zeitraum (WI) zwischen zwei aufeinanderfolgenden Wartungen (W1,W2), also das zugrunde gelegte Wartungsintervall, und eine verbleibende Restzeit (RZ) zum nächsten Wartungsintervall auszuwerten, wobei die Individual-Funktion (MSE) ausgestaltet ist die verbleibende Restzeit als einen weiteren Korrekturfaktor (K3) für die Berechnung der Ist-Kennzahl (hi) zu verwenden.

13. Rechnersystem (50) nach einem der Ansprüche 9 bis 12, wobei die Individual-Funktion (MSE) ausgestaltet ist Degradations-Verläufe (DS1,DS2,DS3,DS4) von Subkomponenten (S1,S2,S3,S4) der Maschine (1) auszuwerten, dazu ist eine Subkomponenten-Bibliothek (SB) vorhanden, wobei die Degradations-Verläufe (DS1,DS2,DS3,DS4) Subkomponenten (S1,S2,S3,S4) der Maschine (1) zugeordnet sind, und wobei die Individual-Funktion (MSE) ausgestaltet ist die Degradations-Verläufe (DS1,DS2,DS3,DS4) der Subkomponenten (S1,S2,S3,S4) für die Berechnung der Ist-Kennzahl (hi) zu verwenden und mit fortschreitender Zeit die Ist-Kennzahl (hi) zu verkleinern, wobei das Gesundheits-Modell (51) ausgestaltet nach einem Austausch einer Subkomponente (S1,S2,S3,S4) durch ein Ersatzteil den zugehörige Degradations-Verlauf (DS1,DS2,DS3,DS4) für diese ausgetauschte Subkomponente (S1,S2,S3,S4) für die Berechnung in der Individual-Funktion (MSE) zeitlich zu verschieben und damit die Gesundheits-Kennzahl (hx) positiv zu beeinflussen.

14. Rechnersystem (50) nach einem der Ansprüche 9 bis 13, ausgestaltet in der Bildschirmansicht (DB) für die Gesundheits-Abschätzung der Maschine (1) neben dem

    ersten zeitlichen Verlauf (10) und dem
    zweiten zeitlichen Verlauf (20) einen
    dritten zeitlichen Verlauf (30) und einen
    vierten zeitlichen Verlauf (40) dargestellt wird, wobei der dritte zeitliche Verlauf (30) als eine untere Grenze für einen zulässigen Bereich der Gesundheits-Kennzahl (hx) ausgestaltet ist und der vierte zeitliche Verlauf (40) als eine obere Grenze für einen zulässigen Bereich der Gesundheits-Kennzahl (hx) ausgestaltet ist, wobei für die Gesundheits-Abschätzung der Maschine (1) ein Abschätzungsmittel (ASM) vorhanden ist, welches ausgestaltet ist, eine 3-stufige Bewertung durchzuführen und für den Fall, dass sich die Gesundheits-Kennzahl (hx) mit ihrem Wert

        1. oberhalb des ersten zeitlichen Verlaufs (10) befindet wird einem Zustandswert (ZW) ein erster Zustand (gn) zugewiesen, für den Fall, dass sich die Gesundheits-Kennzahl (hx) mit ihrem Wert
        2. unterhalb des ersten zeitlichen Verlaufs (10), aber noch oberhalb des dritten zeitlichen Verlaufs (30) befindet wird dem Zustandswert (ZW) ein zweiter Zustand (or) zugewiesen und für den Fall, dass sich die Gesundheits-Kennzahl (hx) mit ihrem Wert
        3. unterhalb des dritten zeitlichen Verlaufs (30) befindet wird dem Zustandswert (ZW) ein dritter Zustand (rt) zugewiesen.

15. Rechnersystem (50) nach einem der Ansprüche 9 bis 14, ausgestaltet zur Online-Berechnung einer Maschinenversicherung und zur Ermittlung von Versicherungstarifen (€), wobei der tatsächliche Zustand und die Verschlechterung der Maschine (1) für einen Maschinenbetreiber (MB) und einem Versicherer (V) visuell auf der Bildschirmansicht (DB) darstellbar ist und damit bilateral ein Versicherungsrisiko bestimmt werden kann, insbesondere ausgestaltet die Versicherungstarife (€) dynamisch anzupassen.

# FIG 1

EP 4 361 748 A1

# FIG 2

FIG 3

FIG 4

# FIG 5

EP 4 361 748 A1

FIG 6

$hx \triangleq ???€$

o.k.

**Europäisches Patentamt**
**European Patent Office**
**Office européen des brevets**

## EUROPÄISCHER RECHERCHENBERICHT

**Nummer der Anmeldung**

**EP 22 20 4125**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2021/075857 A1 (ITS CO LTD [KR]) 22. April 2021 (2021-04-22) * Absatz [0001] – Absatz [0058]; Abbildungen 1-7 * ----- | 1-15 | INV. G05B23/02 |
| X | EP 4 053 410 A1 (HITACHI INDUSTRY EQUIPMENT SYSTEMS CO LTD [JP]) 7. September 2022 (2022-09-07) * Absatz [0002] – Absatz [0049]; Abbildungen 1-6 * ----- | 1-15 | |
| X | EP 3 462 264 A1 (SIEMENS AG [DE]) 3. April 2019 (2019-04-03) * Absatz [0004] – Absatz [0154]; Abbildungen 1-6 * ----- | 1-15 | |

**RECHERCHIERTE SACHGEBIETE (IPC)**

G05B

Der vorliegende Recherchenbericht wurde für alle Patentansprüche erstellt

| Recherchenort | Abschlußdatum der Recherche | Prüfer |
|---|---|---|
| München | 8. Februar 2023 | Rakoczy, Tobias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                  
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 22 20 4125

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-02-2023

| Im Recherchenbericht angeführtes Patentdokument | Datum der Veröffentlichung | Mitglied(er) der Patentfamilie | Datum der Veröffentlichung |
|---|---|---|---|
| WO 2021075857 A1 | 22-04-2021 | KR 20210044658 A | 23-04-2021 |
| | | WO 2021075857 A1 | 22-04-2021 |
| EP 4053410 A1 | 07-09-2022 | CN 114341495 A | 12-04-2022 |
| | | EP 4053410 A1 | 07-09-2022 |
| | | JP 7118940 B2 | 16-08-2022 |
| | | JP 2021072708 A | 06-05-2021 |
| | | US 2022260075 A1 | 18-08-2022 |
| | | WO 2021084821 A1 | 06-05-2021 |
| EP 3462264 A1 | 03-04-2019 | CN 111386503 A | 07-07-2020 |
| | | EP 3462264 A1 | 03-04-2019 |
| | | EP 3673337 A1 | 01-07-2020 |
| | | US 2020310397 A1 | 01-10-2020 |
| | | WO 2019063692 A1 | 04-04-2019 |

EPO FORM P0461

Für nähere Einzelheiten zu diesem Anhang : siehe Amtsblatt des Europäischen Patentamts, Nr.12/82